# EUROPÄISCHE PATENTANMELDUNG

(11) **EP 0 911 224 A1**
(43) Veröffentlichungstag der Anmeldung: **28.04.1999**
(21) Anmeldenummer: 97122588.3
(22) Anmeldetag: 20.12.1997
(51) Int. Cl.: B60R 21/02

(54) **Verriegelungsanordung für einen Sicherheitsbügel an einem Fahrgeschäft**

(30) Priorität: 23.10.1997 CH 2468/97
(71) Anmelder: GIOVANOLA FRERES S.A., 1870 Monthey (CH)
(72) Erfinder: Eberle, Albert, 88450 Berkheim (DE); Pittet, Jacques, 1860 Aigle (CH)
(74) Vertreter: White, William

(57) **Zusammenfassung**

Der Sicherheitsbügel (20) einem Fahrgeschäft ist quer zur Fortbewegungsrichtung eines Sitzes (2) zwischen einer offenen Stellung und einer gesicherten Stellung drehbaren um einen Passagier auf einem Passagiersitz sicher zu haltern. Dazu ist ein Gesperre vorhanden ist von dem ein erstes Sperrrad (22) starr mit dem Sicherheitsbügel (20) verbunden und an der Tragsäule (1) des Passagiersitzes (2) drehbar gehaltert. Die Sperrkante der Klinke (23) ist federbelastet gegen die Sperrzähne des ersten Sperrrades (22) gedrückt. Die Zähne des Sperrrades (22) sind treppenartig mit gegen den Drehpunkt abnehmendem Abstand angeordnet. Ein zweites Gesperre mit einem Sperrrad (24) mit ebenso angeordneten Zähnen wirkt mit derselben Klinke (23) die zum ersten Gesperre gehört zusammen. Dadurch kann sich die Klinke (23) bei nachträglichem fester anziehen des Sicherheitsbügels (20) nicht über den hintenangehenden Zahn abheben und der Sicherheitsbügel (20) bleibt in jeder Stellung gesichert.

## Beschreibung

Die vorliegende Erfindung betrifft eine Verriegelungsanordnung für einen um eine quer zur Fortbewegungsrichtung eines Sitzes in einem Fahrgeschäft zwischen einer offenen Stellung und einer gesicherten Stellung drehbaren Sicherheitsbügel für einen Passagier auf einem Passagiersitz, bei welcher Anordnung ein Gesperre vorhanden ist von dem ein erstes Sperrrad starr mit dem Sicherheitsbügel verbunden ist und an der Tragsäule des Passagiersitzes drehbar gehaltert ist und die Sperrkante der Klinke federbelastet zum Eingriff in die Sperrzähne des ersten Sperrrades ausgebildet ist.

in bekannter Bauart bestehen Verriegelungsanordnungen für Sicherheitsbügel bei Fahrgeschäften aus einem oder aus mehreren mit der Drehachse des Sicherheitsbügels verbundenen Zahnrädern mit sägezahnförmigen Zähnen als Ratsche und einer Klinke, die zusammen ein selbsttätiges Zahngesperre bilden, wobei die Klinkenkraft mittels einer Klinkenfeder bewirkt wird. Dazu sind einerseits noch Vorrichtungen vorhanden, die zum Öffnen des Sicherheitsbügels die Klinke aus den Zähnen der Ratsche herauszuheben, und anderseits sind Vorrichtungen bekannt, die ein unbeabsichtigtes Abheben der Klinke verhindern. Zur Bildung einer Redundanz dienen mehrere solcher Gesperre, die parallel zueinander wirken, oder, wenn eine feinere Abstufung der Verriegelungsschritte verlangt ist nacheinander zur Wirkung kommen.

Wenn nun ein Passagier auf einem Sitz Platz genommen hat, so schliesst entweder er selber oder das Bedienungspersonal den Sicherheitsbügel, der vorerst über Kopf ist und mit einer Drehbewegung gegen die Schulter und/oder möglicherweise auch noch gegen den Bauch gedrückt wird. Entsprechend spricht man von einem Schulterbügel oder einem Bauchbügel. Der Sinn solcher Bügel liegt darin, den Passagier vor Herausfallen aus dem Sitz während der Fahrt zu bewahren und ihm ein Sicherheitsgefühl zu geben. Dieses Gefühl der Sicherheit ist individuell und wird durch den Anpressdruck am Körper bestimmt. Ist der Bügel nicht am Körper anliegend, könnte der Passagier ein Gefühl der Unsicherheit haben oder aber im gravierendsten Fall am Sicherheitsbügel vorbei herausfallen.

Um dieses Sicherheitsgefühl zu bekommen, muss der Passagier die Möglichkeit haben, auch während der Fahrt den Sicherheitsbügel näher zu sich heranzuziehen, um so eine engere und somit sicherere Verriegelungsposition zu erreichen.

Es sind bis heute schon verschiedene Systeme mit Nachstellung des Sicherheitsbügels bekannt geworden. Üblicherweise sind die Zähne eines Sperrrades bei einem Gesperre auf dem Umfang einer Kreisscheibe angeordnet und haben deshalb alle denselben Abstand vom Scheibenzentrum. Wenn mit dem Sicherheitsbügel nach dem ersten Einrasten der Klinke in einem Zahn das Sicherheitsgefühl vergrössert werden soll und deshalb eine Nachstellung durch Heranziehen des Sicherheitsbügels gemacht wird, so wird das Sperrrad gedreht und die Klinke hebt vom Zahn ab um in einen nachfolgenden Zahn einzurasten. Dabei verlässt die Klinke die gesicherte Lage im Eingriff in einer Zahnlücke des Sperrades, so dass dieses auch in der Gegenrichtung bewegt werden könnte, und sich dann der Sicherheitsbügel statt in eine verstärkte in eine schwächere Lage gebracht werden kann, oder aber auch eine vollständige Loslösung ermöglichen würde. Als einzige Sicherheit dient die Klinkenfeder.

Die aber nur dann richtig arbeitet, wenn die Feder die Klinke mit voller Kraft andrücken kann und diese Kraft hiezu auch ausreicht.

Es wurde zur grösseren Sicherheit auch schon vorgeschlagen, mit einem zweiten Gesperre mit grösserer Zahnteilung und mit einer damit zusammenwirkenden Klinke zu sichern. Wurde hier das normale Gesperre versagen, so bliebe das zweite Gesperre noch im Eingriff und würde für die notwendige Sicherheit sorgen, indem ein weiteres Öffnen des Bügels verhindert wird, aber der Passagier könnte so seine gewollte Sicherheit nicht erreichen, aber er bleibt zumindest soweit gesichert, als es die gröbere Zahnteilung zulässt.

Durch die herkömmliche Anordnung der Zähne des Sperrrades auf einem Kreis wird der Durchmesser des Sperrrades bei bestimmten Zahnfolgen und damit die Rastereinteilung des Sicherheitsbügels festgelegt. Ist diese aber zu gross und damit nicht genügend anpassungsfähig für den Passagier, müssen mehrere Gesperre nebeneinander mit versetzter Zahnanordnung vorgesehen werden.

Es ist somit eine Aufgabe der Erfindung, die Sicherheit zu verbessern und dem Passagier ein gefahrloses stärkeres Sicherheitsgefühl zu geben, indem er den Sicherheitsbügel soweit anziehen kann, dass er sich sicher fühlt, ohne die Gefahr zu laufen, dass sich der Sicherheitsbügel dabei lösen kann.

Erfindungsgemäss wird diese Aufgabe durch die Merkmale im kennzeichnenden Teil des unabhängigen Anspruch 1 gelöst, indem Sperrrad und Sperrklinke je eine kreisförmige Umfangspartie mit gleichem Radius aufweisen deren Mittelpunkte im Drehpunkt des Sperrrades liegen, dass im Anschluss an diese Umfangspartie das Sperrrad eine gezahnte Partie aufweist, deren Zähne treppenförmig angeordnet sind und so auf einer Kurve liegen, deren Abstand gegen das Drehzentrum hin stufenweise abnimmt.

Nachfolgend wird die Erfindung an Hand eines Ausführungsbeispiel näher unter Zuhilfenahme der Zeichnung erläutert. In der Zeichnung zeigen:
- Fig.1: in vereinfachter Darstellung einen Fahrgastsitz mit einem angedeuteten Passagier und einem Sicherheitsbügel in offener Stellung,
- Fig.2: dieselbe Darstellung wie in Fig.1 jedoch mit dem Sicherheitsbügel in gesicherter Lage,
- Fig.3: zwei sich gegenüberliegende Gesperre nach der Erfindung gemäss Fig. 1 und 2 in offener Stellung,
- Fig.4: dieselbe Darstellung wie Fig.3 jedoch mit den Gesperren in mittelgeschlossener Stellung,
- Fig.5: dieselbe Darstellung wie in Fig.3 jedoch mit grösstmöglicher geschlossener Stellung.
- Fig.6: einen Ausschnitt in vergrössertem Massstab aus Fig.2 mit einem zweiten Gesperre in Form eines Reibgesperres mit dem Sicherheitsbügel in geschlossener Lage

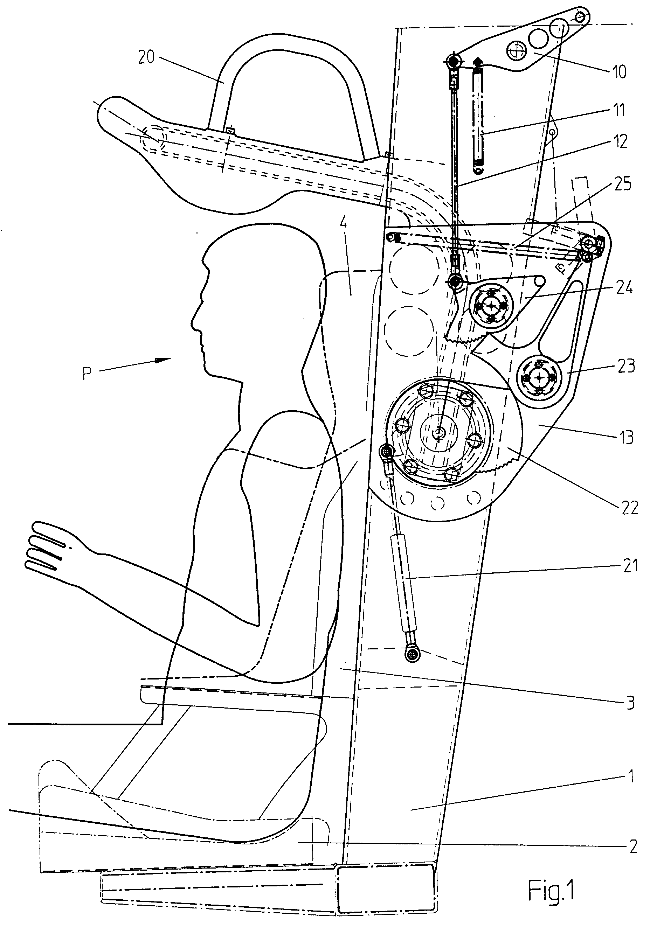

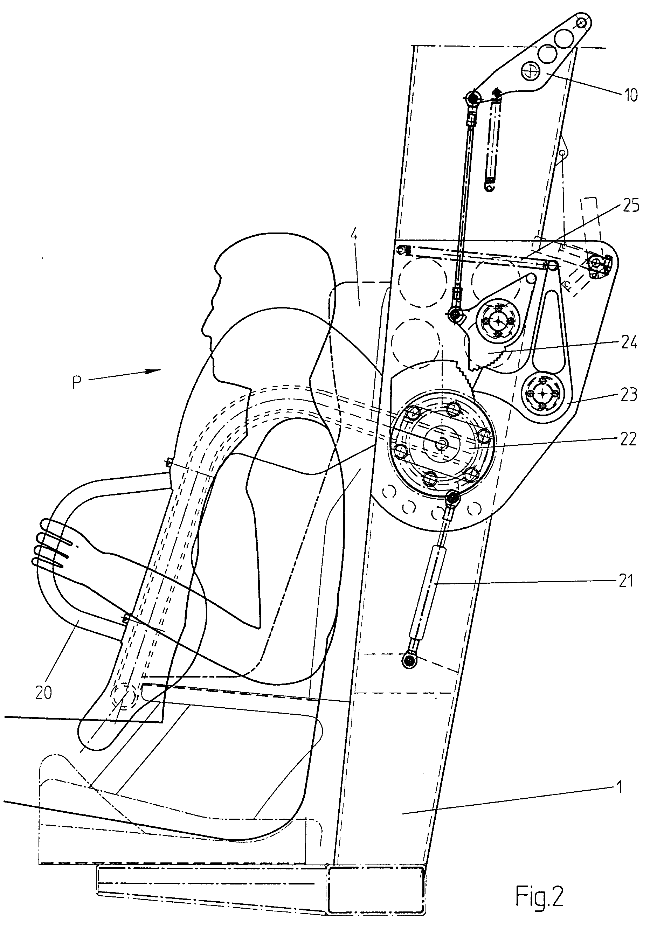

Fig.1 und 2 zeigen eine Tragsäule 1 für die Halterung eines Sitzes 2 mit Rückenpolster 3 und Kopfstütze 4. An der Säule 1 ist eine Platte 13 für die Befestigung der Sicherheits-Gesperre 22, 23, 24 vorhanden. Diese Gesperre bestehen aus einem Sperrrad 22, 24 und einer Klinke 23. Die Klinke ist mit einer Klinkenfeder 25 im Gegenuhrzeigersinn vorgespannt. Eine Gasfeder 21 wirkt auf das eine Sperrrad 22 und stösst damit den Sicherheitsbügel mit im Uhrzeigersinn wirkender Kraft in die offene Stellung. Wird das Sperrrad 22 mittels des Sicherheitsbügels 20 gedreht, so dass der Sicherheitsbügel 20 in die geschlossene Lage gemäss Fig.2 gebracht wird, drückt die Gasfeder 21 das Sperrrad 22 im Gegenuhrzeigersinn und hält damit den Sicherheitsbügel in am Passagier anliegender Lage.

Soweit ist es übliche Technik und bekannt. Erfindungsgemäss sind die Zähne des Sperrrades 22 nicht zirkular auf dem Umfang einer Kreisscheibe angeordnet sondern sie sind treppenförmig mit abnehmendem Abstand zur Drehachse des Sperrrades 22 angeordnet. Somit kann die Klinke 23, die unter der Zugkraft der Klinkenfeder 25 steht, nicht nach der Richtung mit grösserem Abstand von der Drehachse abspringen und es besteht eine Sicherheit dass wenn der Passagier den Sicherheitsbügel gegen sich zieht, die Klinke nicht abgehoben wird und den Sicherheitsbügel freigibt.

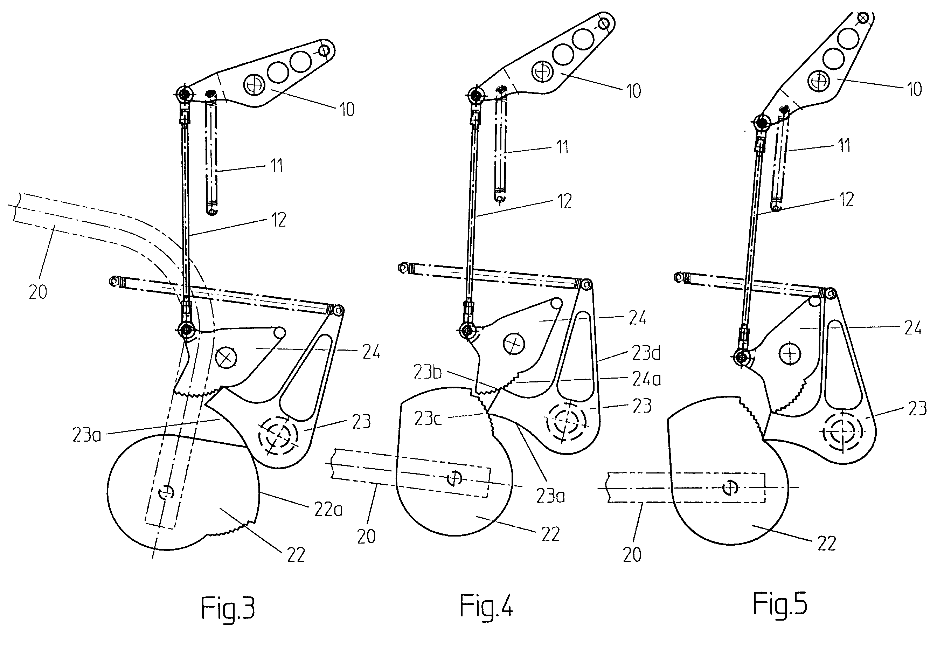

Eine zusätzliche Sicherheit kann mit einem zweiten Gesperre erreicht werden, indem beim zweiten Sperrrad 24 eine ebensolche Zahnanordnung wie beim ersten Sperrrad 22 vorhanden ist, bei dem der Abstand der Zähne bezüglich des Drehpunktes stufenartig abnimmt. Überdies ist die Klinke 23 die mit dem ersten Sperrrad 22 zusammenwirkt auch die Sperrklinke für das zweite Sperrrad 24. Wie aus Fig 3 bis 5 deutlich ersichtlich ist weist das erste Sperrrad 22 eine kreisförmige Partie 22a auf und die Sperrklinke 23 weist eine entsprechend komplementäre kreisförmige Partie 23a auf. Wie Fig 3 zeigt, wird bei geöffnetem Sicherheitsbügel 20 diese kreisförmige Partie 23a der Klinke mit ihrem Rastarm 23b durch die Klinkenfeder 25 gegen die entsprechende kreisförmige Partie 22a des Sperrrades 22 gedrückt und sie steht damit am Ende der gezahnten Partie des zweiten Sperrrades 24 an. Der Hebelarm 10 hält mit der Hebelarmfeder 11 und der Stange 12 das zweite Sperrrad 24 in der genannten Eingriffsstellung.

Wird nun der Sicherheitsbügel 20 in seine geschlossene Stellung gebracht, so dreht sich das erste Sperrrad 22 im Uhrzeigersinn und die Klinke 23 greift in die Zahnung des ersten Sperrrades 22 ein, wie Fig.4 zeigt und bewirkt eine sichere Halterung des Sicherheitsbügels 20. Durch die Bewegung des Sicherheitsbügels 20 wird der Hebelarm 10 im Gegenuhrzeigersinn gedreht wodurch die Stange 12 das zweite Sperrrad 24 mit der Kraft der Feder 11 auf die Klinke 23 drückt.

Hat der Passagier nun ein Gefühl der Unsicherheit, so zieht er den Sicherheitsbügel 20 gegen seinen Körper. Durch die zweifache Sperrung mit erstem Sperrrad 22 und zweitem Sperrrad 24 mit derselben Klinke 23 kann sich die Halterung nicht lösen was somit zur verbesserten Sicherheit in einem Fahrgeschäft führt.

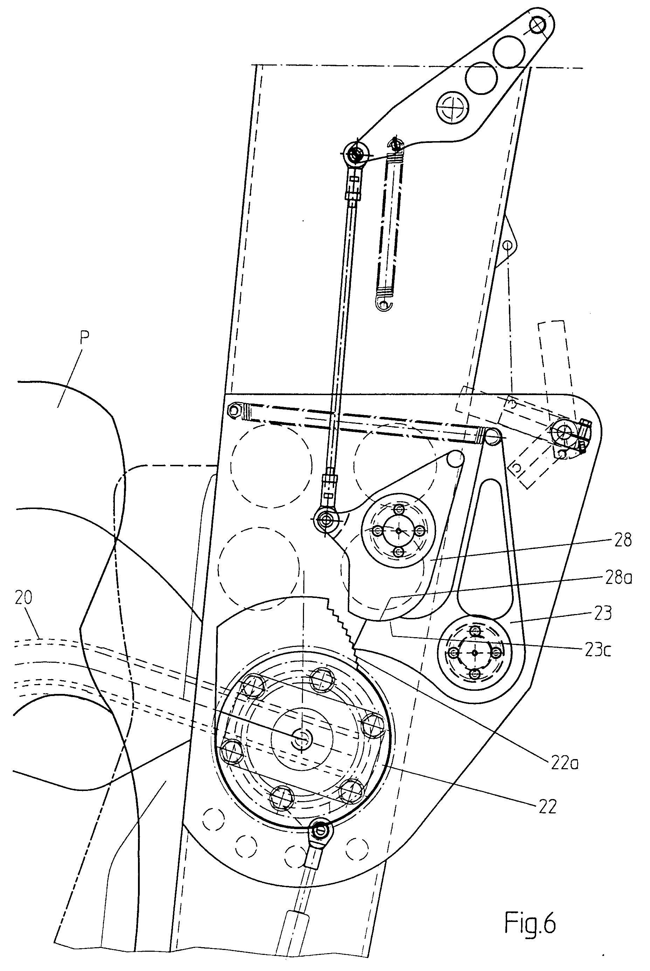

Anstelle von zwei Zahngesperren, wie in Fig.1 bis 5 dargestellt ist, würde es für die Sicherheit auch genügen, wenn nur das erstgenannte Gesperre mit dem Sperrrad 22 und der Sperrklinke 25 mit zugehöriger Sperrkante 26 als Zahngesperre ausgebildet wäre, wie Fig. 6 und 7 zeigen. Das zweite Gesperre könnte ebensogut auch als Reibgesperre ausgebildet sein, bei dem das zweite Sperrrad 24a mit einer Reibfläche 27 versehen, und der Sperrhebel an seiner zweiten Sperrseite als eine Sperrbacke 28 ausgebildet wären. Wenn in Fig.6 der Sperrhebel 23 für das Reibgesperre mit einer Reibbacke versehen ist, wäre es auch denkbar, wenn anderen Stell eine Rolle vorgesehen wäre. Solche Gesperre sind im Mschinenbau gut bekannte Konstruktionselemente und müssen deshalb an dieser Stelle nicht besonders beschrieben sein.

Wichtig ist hingegen auch bei dieser Anordnung, dass die Reibfläche 27 kurvenartig ausgebildet ist, die in gesicherter Lage gemäss Fig. 6 mit ihrem grössten Abstand vom Drehzentrum des Sperrrades 29 dem kleinsten Abstand der Zähne vom Drehzentrum beim Sperrrad 22 des ersten Gesperres gegenübersteht. So dass mit der Sperrfeder 25 zusammen von einem Klemmgesperre gesprochen werden kann.

## Patentansprüche

1. Verriegelungsanordnung für einen um eine quer zur Fortbewegungsrichtung eines Sitzes (2,3,4) in einem Fahrgeschäft zwischen einer offenen Stellung und einer gesicherten Stellung drehbaren Sicherheitsbügel (20) für einen Passagier (P) auf einem Passagiersitz, bei welcher Anordnung ein Gesperre (22,23) vorhanden ist von dem ein erstes Sperrrad (22) starr mit dem Sicherheitsbügel (20) verbunden ist und an der Tragsäule (1) des Passagiersitzes (2,3,4) drehbar gehaltert ist und die Sperrkante (26) der Klinke (23) federbelastet gegen die Sperrzähne des ersten Sperrrades gedrückt ist, **dadurch gekennzeichnet**,dass Sperrrad (22) und Sperrklinke (23) je eine kreisförmige Umfangspartie (22a,23a) mit gleichem Radius aufweisen deren Mittelpunkte im Drehpunkt des Sperrrades (22) liegen, dass im Anschluss an diese Umfangspartie (22a) das Sperrrad (22) eine gezahnte Partie (22b) aufweist, deren Zähne treppenförmig angeordnet sind und so auf einer Kurve liegen, deren Abstand gegen das Drehzentrum hin stufenweise abnimmt.

2. Anordnung nach Anspruch 1, **gekennzeichnetdurch** ein zweites Sperrrad (24) im Abstand vom erstgenannten Sperrrad (22) mit ebenfalls treppenförmig angeordneten Zähnen (24a) mit abnehmendem Abstand zum Drehpunkt, dass die Zähne (24a) dieses zweiten Sperrrades (24) gegensinnig bezüglich den Zähnen (22b) des erstgenannten Sperrrades (22) angeordnet sind, derart, dass bei kleinstem Abstand der Zähne von der Drehachse des erstgenannten Sperrrades (22) die Zähne am zweiten Sperrrad (24) den grössten Abstand von dessen Drehachse aufweist, dass die Klinke (23) eine zweite Sperrkante (23b) zum gleichzeitigen Eingreifen in die Zähne beider Sperrräder (22,24) aufweist, und dass die Abstände der Zähne von den jeweiligen Drehachsen der beiden Sperrräder gegensinnig angeordnet sind.

3. Anordnung nach Anspruch 1, **gekennzeichnetdurch** ein zweites Gesperre (28) im Abstand vom erstgenannten Sperrrad (22) mit einer Reibfläche (28a) mit abnehmendem Abstand zum Drehpunkt, derart, dass bei kleinstem Abstand der Zähne (22a) von der Drehachse des erstgenannten Sperrrades (22) die Reibfläche (28a) am zweiten Sperrrad (28) den grössten Abstand von dessen Drehachse aufweist, dass die Klinke (23) gegenüber der Sperrkante (23c) für den Eingriff in die Zähne des erstgenannten Sperrrades (22) eine zum gleichzeitigen Sperren des zweiten Sperrrades (28) mit einem Reibelement (23c) an der Reibfläche (28a) versehen ist.

4. Anordnung nach Anspruch 2, **dadurch gekennzeichnet**,dass die Klinke als gebogener zweiarmiger Hebel (23) ausgebildet ist, an dessen einen Arm (23c) die Sperrklinkenfeder (25) angreift und dessen zweiter Arm (23b) mit zwei Sperrelementen (23b,23c,26) ausgebildet ist, von denen je eine zum Eingriff in die Zähne je eines der beiden Sperrräder (22,24) bestimmt ist und welcher zweiter Arm (23b) zudem mit einer kreisförmigen Führungskurve (23a) versehen ist, die zum Auflaufen auf einem entsprechenden Kreissegment (22a) am erstgenannten Sperrrad (22) geformt ist, so dass die dem zweiten Sperrrad (24) zugeordnete Klinkenkante (23b) gegen dieses in offener Position des Haltebügels (20) gehalten ist.

5. Anordnung nach Anspruch 3, **dadurch gekennzeichnet**,dass die Sperre als gebogener zweiarmiger Hebel (23) ausgebildet ist, an deren einen Arm (23c) die Sperrfeder (25) angreift und dessen zweiter Arm (23b) mit einer Klinkenkante (26) und einem Reibelement (23c) ausgebildet ist, und die Klinkenkante (26) zum Eingriff in die Zähne (22b) des erstgenannten Sperrrades (22) und das Reibelement (23c) zur Auflage auf der Reibfläche (28a) des zweiten Gesperres bestimmt sind und welcher zweiter Arm (23b) zudem mit einer kreisförmigen Führungskurve (23a) versehen ist, die zum Auflaufen auf einem entsprechenden Kreissegment (23a22b) am erstgenannten Sperrrad (22) geformt ist, so dass das dem zweiten Gesperre zugeordnete Reibelement (28a) dieses in offener Position des Haltebügels (20) gehalten ist.

6. Anordnung nach Anspruch 5, **dadurch gekennzeichnet**,dass das Reibelement eine Reibfläche ist.

7. Anordnung nach Anspruch 5, **dadurch gekennzeichnet**,dass das Reibelement eine Rolle ist.

8. Anordnung nach einem der vorangehenden Ansprüche 1 bis 7, **dadurch gekennzeichnet**,dass am erstgenannten Sperrrad (22) eine Gasfeder (21) derart angeordnet ist, dass zwei Endstellungen bestimmt sind, von denen die eine den Sicherheitsbügel (20) in offener Stellung und die zweite den Sicherheitsbügel gegen den Passagier
